# EUROPEAN PATENT SPECIFICATION

(11) **EP 2 091 298 B1**
(45) Date of publication and mention of the grant of the patent: **16.05.2012**
(21) Application number: 08290165.3
(22) Date of filing: 18.02.2008
(51) Int. Cl.: H04W 16/26, H04W 84/04, H04W 72/08, H04W 76/02

(54) **FDD inband backhauling and method thereof**
FDD-Inband-Rückverbindung und Verfahren
Transport de retour FDD intrabande

(43) Date of publication of application: 19.08.2009
(73) Proprietor: Alcatel Lucent, 75007 Paris (FR)
(72) Inventor: Tangemann, Michael, 71229 Leonberg (DE); Halbauer, Hardy, 76275 Ettlingen (DE)
(74) Representative: Schmidt, Werner Karl

(56) References cited:
- EP-A- 0 418 103
- EP-A- 1 777 877
- WO-A-03/058984
- US-A- 5 883 884

## Description

### Field of the invention

This invention relates to FDD inband backhauling and, more specifically to a method for establishing a wireless transmission between an access base station to a master base station.

### Background and related art

A duplex communication system is a system composed of two devices that can communicate in both directions. In half-duplex, the communication cannot be completed in both directions simultaneously, and one of the devices receives a signal, and waits for the transmitter to stop transmitting before replying. In full-duplex, the communication is completed simultaneously, which is typically the case for digital mobile communication systems such as UMTS, WiMAX (IEEE 802.16) or Long Term Evolution (LTE). The full-duplex communication can be further divided into frequency-division duplex (FDD) or time-division duplex (TDD). In time-division duplex, the transmitter and receiver use different time slots, with a time separation that is not perceived by the end users. In frequency-division duplex (FDD), the transmission and reception uses different operating frequencies. A frequency offset between both transmitter and receiver frequencies is required in order to filter the transmitting and receiving signals and avoid interference between both signals.

In digital mobile communication systems, a mobile station communicates with an access point or access base station, and the signals from all access base stations are transmitted to one or more master base station. This transportation is known as backhauling. Therefore a method of FDD inband backhauling in a digital cellular communication system from an access base station to a master base station, to a relay base station and a computer program product adapted for performing the method in accordance with the invention is needed.

US-A-5883884 describes a wireless communication system having hierarchical wireless repeaters with autonomous hand-off. Third level repeaters receive a signal in a first frequency band and transmit the signal in another frequency band to second and first level of repeaters which transmit the signal in the first frequency band to a base station. The different reception and transmission frequencies are used by duplexers in the repeaters to mutually isolate reception and transmission. EP-A-1777877 describes an apparatus and a method for supporting multiple links in a multi-hop relay cellular network using at least two frequency bands. A subframe for a link on which a Mobile Station or a Relay Station communicates with a Base Station is configured in a first frequency band, and a subframe for a link on which the Base Station or the Relay Station communicates with the Mobile Station is configured in a second frequency band.

### Summary

The present invention provides an FDD inband backhauling method for establishing a wireless transmission from at least one access base station to a master base station in a digital cellular communication system, the access base station is coupled to at least a mobile station, the access base station is coupled to a relay base station, the relay base station is coupled to the master base station, and the master base station is coupled to a core network. The method comprises the steps of: receiving a first signal s1 by the access base station from the mobile station using a first frequency band f1; transforming the first frequency band f1 of the first signal s1 into the second frequency band f2 by the access base station; and transmitting the first signal s1 from the access base station to the relay base station using the second frequency band f2, wherein the access base station is adapted for transmission using the second frequency band f2.

The method further comprises the steps of: transforming the second frequency band f2 of the first signal s1 into the first frequency band f1 by the relay base station, wherein the relay base station is adapted for transmission using the first frequency band f1; and transmitting the first signal s1 from the relay base station to the master base station using the first frequency band f1. The transformation of the frequency bands of the signal from a first frequency f1 to a second frequency f2 or vice-versa may be achieved through demodulation and modulation of the signal, or any other frequency conversion technique.

One of the advantage of the embodiments is that the backhauling in inband frequency-division duplex (FDD) allows an extended coverage of remote locations using a fast network rollout, and reusing the same frequency bands that are used for communication with the mobile stations. A further advantage is that the base stations are not required to transmit and receive using the same frequency band, as a first frequency band is used for transmission and a second frequency band is used for receiving signals from other base stations or mobile stations.

In accordance with an embodiment of the invention, the method further comprises the steps of: receiving a second signal s2 by the relay base station from the master base station using the second frequency band f2; transforming the second frequency band f2 of the second signal s2 into the first frequency band f1 by the relay base station; and transmitting the second signal s2 from the relay base station to the access base station using the first frequency band f1. The method further comprises the steps of: transforming the first frequency band f1 of the second signal s2 into the second frequency band f2 by the access base station; and transmitting the second signal s2 from the access base station to the mobile station using the second frequency band f2.

In accordance with an embodiment of the invention, the digital cellular communication system complies with the IEEE 802.16 and/or Long Term Evolution (LTE) standards. In accordance with an embodiment of the invention, the base stations further comprise a directional antenna for extending signal transmission reach.

In another aspect, the invention relates to a computer program product stored on a computer usable medium, comprising computer readable program means for causing a computer to perform a method according to any of the preceding claims 1 to 5 when the program is run on the computer.

In another aspect, the invention relates to a first relay base station in a digital cellular communication system, the cellular communication system further comprises an access base station coupled to the first relay base station, the first relay base station coupled to a second base station. The first relay base station comprises: means for receiving a first signal s1 from the access base station using the second frequency band f2, wherein the first relay base station is adapted for receiving using the second frequency band f2; and means for transforming the second frequency band f2 of the first signal s1 into the first frequency band f1, wherein the first relay base station is adapted for transmitting using the first frequency band f1.

The method further comprises: means for transmitting the first signal s1 to the second base station using the first frequency band f1; means for receiving a second signal s2 from the second base station using the second frequency band f2; means for transforming the second frequency band f2 of the second signal s2 into the first frequency band f1; and means for transmitting the second signal s2 to the access base station using the first frequency band f1.

An advantage of the embodiments is that there is no need to design a completely different relay base station, as most of the hardware used for the access and master base station can also be used for the relay base station (BS). The relay BS only requires to invert the transmission and reception carrier frequencies or, alternatively, to use a different transmitter and receiver hardware.

In another preferred embodiment, the second base station is a master base station, the master base station is coupled to a core network, the master base station adapted for communicating from a plurality of access base station within the digital cellular communication system.

In accordance with an embodiment of the invention, the second base station is coupled to a third relay base station, the third relay base station coupled to a master base station, the master base station adapted for receiving communication from a plurality of access base station within the digital cellular communication system, wherein the second base station is adapted to communicate with a plurality of mobile stations, wherein the third relay station is a first relay station as described in the embodiments of the invention.

### Brief description of the drawings

In the following preferred embodiments of the invention will be described in greater detail by way of example only making reference to the drawings in which:
- Fig. 1: shows a block diagram of a digital cellular communication system according to an embodiment of the invention,
- Fig. 2: shows a second block diagram of a digital cellular communication system according to a further embodiment of the invention,
- Fig. 3: shows a relay base station according to a further embodiment,
- Fig 4.: shows a flow diagram according to a further embodiment.

### Detailed description

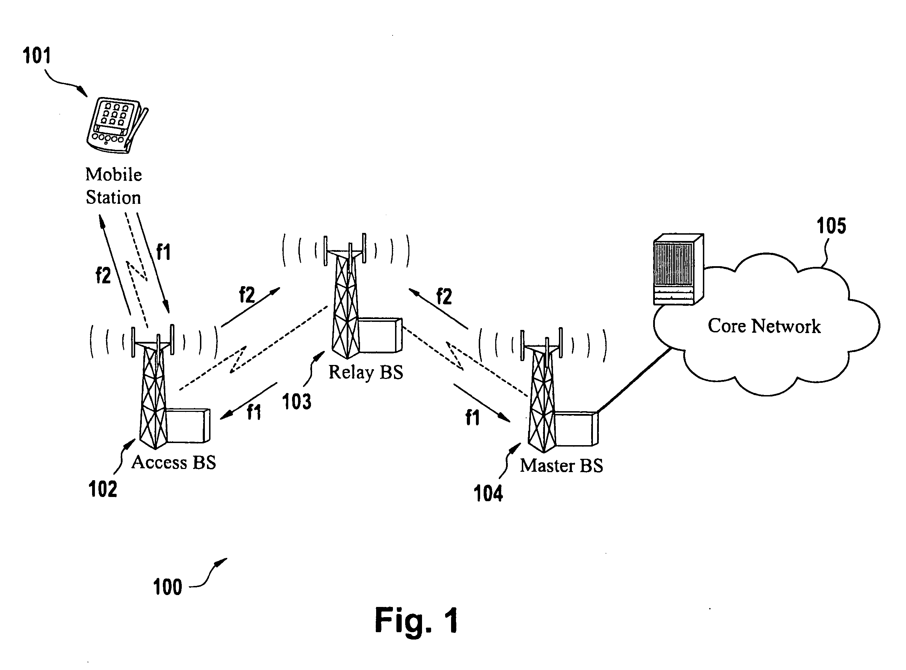

Fig. 1 shows a block diagram of a digital cellular communication system 300 comprising at least a mobile station 101 coupled to an access base station 102, the access base station 102 coupled to a relay base station 103, the relay base station 103 coupled to a master base station 104, the master base station 104 coupled to a core network 105.

When a mobile station 101 communicates with an access base station 102, it uses a first frequency band f1 in the uplink direction and when the access base station 102 communicates to the mobile station 101 in the downlink direction, it uses a second frequency band f2. If the mobile station 101 transmits the first signal to the access base station 102 using the first frequency band, the access base station 102 converts the signal into the second frequency band, so that the access base station 102 can transmit the first signal to the relay base station 103 using the second frequency band f2. The demodulation and modulation or any other technique of frequency conversion can be used. All the signals that are transmitted from the mobile station 101 to the access base station 102 are transformed and transmitted to the relay base station 103 using the second frequency band. The relay base station 103 receives the signal coming from the access base station 102 and converts the signal using as a carrier frequency the first frequency f1, in order to communicate and transmit the signal to the master base station 104. As the master base station 104 is coupled to the core network 105, the signal reaches the final destination as, for example, to another mobile station located in another access base station.

If a second signal is transmitted from the master base station and its final destination is the mobile station 101, the master base station 104 first communicates with the relay base station 103 using a second frequency band f2; the relay base station 103 will transform the signal and change the carrier frequency into the first frequency band f1 in order to communicate and transmit the signal to the access base station 102. The access base station 102 converts the second signal to second frequency band f2, so that the mobile station receives in the downlink direction the second signal f2. As the relay base station 103 transmits using a first frequency band f1 and receives using the second frequency band f2, the relay base station 103 or any relay base station is not capable of communicating with a mobile station as the mobile station 101 unless the mobile station is adapted to invert the uplink and downlink frequencies.

The main advantage of the embodiments is that the frequency division duplex backhauling allows an extended coverage of sparsely populated areas and allows the communication between remote access base stations and a master base station without deploying an expensive physical layer as, e.g. fiber optic. Another advantage is that the base station transmits into the same frequency and receives also into the same frequency band, and avoids a simultaneous transmission and reception into the same radio frequency, a technique that is very complex and expensive to implement. A further advantage is that there is no need of designing a complete different relay base station, as most of the hardware used in the access base station and the master base station can also be adapted to build the relay base station. It is only required to invert the transmission and reception carrier frequencies or, alternatively, to use a different transmitter and receiver hardware. A further advantage is that the inband backhauling using relay base station allows a fast network rollout and can be easily deployed in areas without a fixed infrastructure.

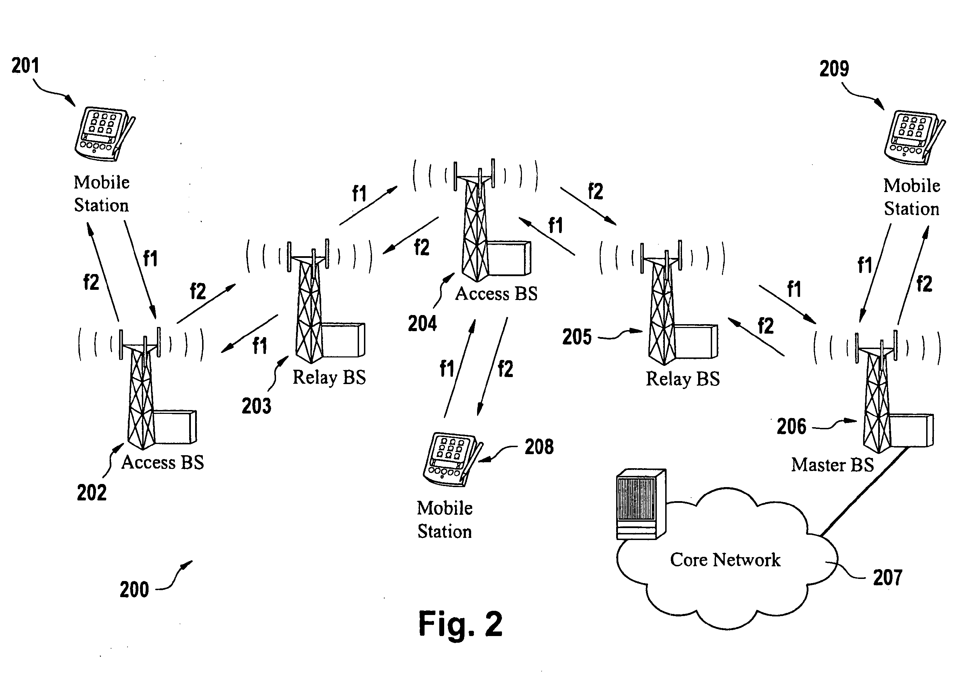

Fig. 2 shows a second example of an FDD inband backhauling according to an embodiment of the invention. The mobile communication system 200 comprises a mobile station 201 coupled to a first access base station 202, the access base station 202 coupled to a relay base station 203, the relay base station 203 coupled to a second access base station 204, the second access base station 204 coupled to a relay base station 205 and to a first mobile station 208, the relay base station 205 coupled to a master base station 206; the master base station 206 coupled to a core network 207 and to a second mobile station 209.

When a base station as the first base station 202 is located in a sparsely populated area from the master base station, or from the connection to the core network, one or more relay base stations may be needed in order to backhaul the information received and transmitted by the access base station. In the mobile communication system 200 there are two relay base stations 203, 205 that allow the remote connection between the access base station 202 and the core network 207. Between both relay base stations there is a second access base station 204 that permits the mobile station located between the area of the relays 203 and 205 to communicate as well with the core network, as it is the case of the second mobile station 208.

In the cellular communication system 200, the transformation or the inversion of the frequency bands between the uplink and the downlink bands is carried in a way that, for example, in the downlink direction from the core network 207 and the master base station 206 the signal using a second frequency band f2 is transmitted to a relay station 205 that inverts the frequency band and communicates with a second access base station 204 using the first frequency band f1. The same process is repeated in the access base station 204 to mix the signal using the second frequency band to a first relay base station 203. The process is repeated between the relay base station 203 and the access base station 202, where the first frequency band f1 is used as the carrier frequency of this first signal to communicate with the access base station 202. Finally, the access base station 202 communicates in the downlink with the mobile station 201 using the second frequency band f2.

In the cellular communication system 200, the access base station 202, the second access base station 204, as well as the master base station 206 are able to communicate with the mobile stations 201, 208 and 209. Between the base stations and the mobile station, the frequency bands that are used in the uplink and the downlink are at the same frequency bands that the mobile stations use to communicate with the base stations. As it can be seen from fig. 2 all mobile stations communicating with an access and master base station uses an uplink with the frequency band f1 and a downlink with the frequency band f2. For all base stations, including the relays, the access and the master base station, the transmission uses only one frequency band. For example, the access base station 204 transmits to both relay base stations 203 and 205 using the second frequency band f2 and receives from said relay base station using only the first frequency band f1.

The organization of the frequency bands has a great advantage as the base stations do not require to transmit and receive simultaneously using the same frequency band, as the transmission and the reception is always completed using different frequency bands, as is the case of f1 and f2. This is also true for all base stations that belong to the inband backhauling. Another advantage is that the same frequency bands that are used to communicate with a mobile station are the ones used to transport data from the access base stations up to the core network, so that there is no extra frequency band required for the communication between the base stations. This is a special advantage for communication systems that have a medium density amount of subscribers and contain unused capacity for a connection.

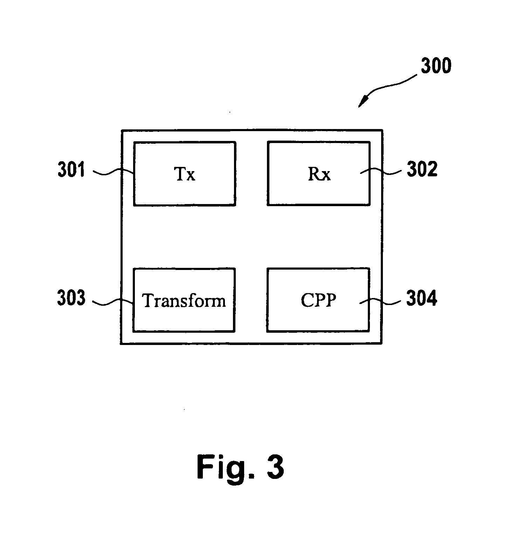

Fig. 3 shows a block diagram of a relay base station 300 comprising means for transmitting 301 a first or a second signal s1, s2 on a first frequency band f1 to a master base station or an access base station; means for receiving 302 the first or the second signal s1, s2 using the second frequency band f2 from a second and third base station, wherein the second and third base stations can be a master, an access or another relay base station. The relay base station 300 further comprises means for transforming the second frequency band f2 of the first or second signal s1, s2 into the first frequency band f1. Because the signals received from master and access base stations use the same frequency band, they must be separated in another domain, e.g. time domain (frame), subcarrier domain (OFDMA) or code domain (CDMA).

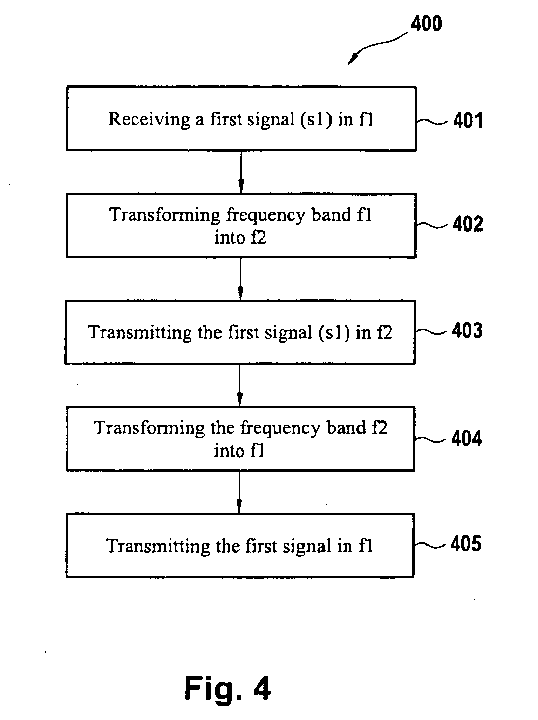

Fig. 4 shows a flow diagram of an FDD inband backhauling method for establishing a wireless transmission from at least one access base station to a master base station in a digital cellular communication system. The first step 401 of the method receives a first signal s1 by the access base station from the mobile station using a first frequency band f1. The second step 402 transforms the first frequency band f1 of the first signal s1 into the second frequency band f2 by the access base station. The third step 403 transmits the first signal s1 from the access base station to the relay base station using the second frequency band f2, wherein the access base station is designed for transmitting using the second frequency band f2. The forth step 404 transforms the second frequency band f2 of the first signal s1 into the first frequency band f1 by the relay base station, wherein the relay base station is designed for transmitting using the first frequency band f1. Finally, the fifth step 405 transmits the first signal s1 from the relay base station to the master base station using the first frequency band f1.

### List of Reference Numerals

| | |
|---|---|
| 100 | Block diagram |
| 101 | Mobile station |
| 102 | Access base station |
| 103 | Relay base station |
| 104 | Master base station |
| 105 | Core network |
| 200 | Block diagram |
| 201 | Mobile station |
| 202 | First access base station |
| 203 | FirstRelay base station |
| 204 | Second access base station |
| 205 | Second relay base station |
| 206 | Master base station |
| 207 | Core network |
| 208 | Second mobile station |
| 209 | Third mobile station |
| 300 | Relay base station |
| 301 | Means for receiving |
| 302 | Means for transforming |
| 303 | Means for transmitting |
| 400 | Flow diagram |
| 401 | First step |
| 402 | Second step |
| 403 | Third step |
| 404 | Forth step |
| 405 | Fifth step |

## Claims

1. A frequency-division duplex (FDD) inband backhauling method for establishing a wireless transmission from at least one access base station (102) to a master base station (104) in a digital cellular communication system, said access base station (102) coupled to at least a mobile station (101), said access base station (102) coupled to a relay base station (103), said relay base station (103) coupled to said master base station (104), said master base station (104) coupled to a core network (105), said method comprising the steps of:
- receiving a first signal (s1) by said access base station (102) from said mobile station (101) using a first frequency band (f1);
- transforming said first frequency band (f1) of said first signal (s1) into a second frequency band (f2) by said access base station (102);
- transmitting said first signal (s1) from said access base station (102) to said relay base station (103) using said second frequency band (f2), wherein said access base station (102) is adapted for transmission using said second frequency band (f2);
- transforming said second frequency band (f2) of said first signal (s1) into said first frequency band (f1) by said relay base station (103), wherein said relay base station (103) is adapted for transmission using said first frequency band (f1); and
- transmitting said first signal (s1) from said relay base station (103) to said master base station (104) using said first frequency band (f1),
**characterized by**
- receiving a second signal (s2) by said relay base station (103) from said master base station (104) using said second frequency band (f2);
- transforming said second frequency band (f2) of said second signal (s2) into said first frequency band (f1) by said relay base station (103);
- transmitting said second signal (s2) from said relay base station (103) to said access base station (102) using said first frequency band (f1);
- transforming said first frequency band (f1) of said second signal (s2) into said second frequency band (f2) by said access base station (102); and
- transmitting said second signal (s2) from said access base station (102) to said mobile station (101) using said second frequency band (f2).

2. The method as in claim 1, wherein said digital cellular communication system complies with the IEEE 802.16 and/or Long Term Evolution standards.

3. The method as in claim 1, wherein said base stations further comprises a directional antenna for extending signal transmission reach.

4. A computer program product stored on a computer usable medium, comprising computer readable program means for causing a computer to perform a method according to any of the preceding claims 1 to 3 when said program is run on said computer.

5. A first relay base station in a digital cellular communication system, said cellular communication system further comprising an access base station coupled to said first relay base station, wherein said access base station is adapted to communicate with a plurality of mobile stations, wherein said first relay base station is coupled to a second base station, said first relay base station comprising:
- means for receiving a first signal (s1) from said access base station using said second frequency band (f2), wherein said first relay base station is adapted for receiving using said second frequency band (f2);
- means for transforming said second frequency band (f2) of said first signal (s1) into said first frequency band (f1), wherein said first relay base station is adapted for transmitting using said first frequency band (f1);
- means for transmitting said first signal (s1) to said second base station using said first frequency band (f1).
- means for receiving a second signal (s2) from said second base station using said second frequency band (f2);
- means for transforming said second frequency band (f2) of said second signal (s2) into said first frequency band (f1);
- means for transmitting said second signal (s2) to said access base station using said first frequency band (f1).

6. A first relay base station as in claim 5, wherein said second base station is a master base station, said master base station is coupled to a core network, said master base station adapted for communicating from a plurality of access base station within said digital cellular communication system, wherein said master base station is adapted to communicate with a plurality of mobile stations.

7. The first relay base station as in claim 5, wherein said second base station is coupled to a third relay base station, said third relay base station coupled to a master base station, said master base station adapted for receiving communication from and transmitting to a plurality of access base station within said digital cellular communication system, wherein said master base station is adapted to communicate with a plurality of mobile stations, wherein said third relay station is a first relay station as described in claim 6.

8. The first relay base station as in claim 7, wherein said second base station is adapted to communicate with a plurality of mobile stations.

## Patentansprüche

1. Frequenzduplex- bzw. FDD-Inband-Rückverbindungsverfahren für das Herstellen einer drahtlosen Übertragung von mindestens einer ersten Zugangsbasisstation (102) an eine Master-Basisstation (104) in einem digitalen zellularen Kommunikationssystem, wobei die besagte Zugangsbasisstation (102) an mindestens eine mobile Station (101) gekoppelt ist, wobei die besagte Zugangsbasisstation (102) an eine Relais-Basisstation (103) gekoppelt ist, wobei die besagte Relais-Basisstation (103) an die besagte Master-Basisstation (104) gekoppelt ist, wobei die besagte Master-Basisstation (104) an ein Kernnetzwerk (105) gekoppelt ist, wobei das besagte Verfahren die folgenden Schritte umfasst:
- Empfangen eines ersten Signals (s1), an der besagten Zugangsbasisstation (102), von der besagten mobilen Station (101) unter Verwendung eines ersten Frequenzbands (f1);
- Umwandeln, durch die besagte Zugangsbasisstation (102), des besagten ersten Frequenzbands (f1) des besagten ersten Signals (s1) in ein zweites Frequenzband (f2);
- Übertragen des besagten ersten Signals (s1) von der besagten Zugangsbasisstation (102) an die besagte Relais-Basisstation (103) unter Verwendung des besagten zweiten Frequenzbands (f2), wobei die besagte Zugangsbasisstation (102) dazu ausgelegt ist, die Übertragung unter Verwendung des besagten zweiten Frequenzbands (f2) durchzuführen;
- Umwandeln, durch die besagte Relais-Basisstation (103), des besagten zweiten Frequenzbands (f2) des besagten ersten Signals (s1) in das besagte erste Frequenzband (f1), wobei die besagte Relais-Basisstation (103) dazu ausgelegt ist, die Übertragung unter Verwendung des besagten ersten Frequenzbands (f1) ausgelegt ist; und
- Übertragen des besagten ersten Signals (s1) von der besagten Relais-Basisstation (103) an die besagte Master-Basisstation (104) unter Verwendung des besagten ersten Frequenzbands (f1),
**gekennzeichnet durch**:
- Empfangen, an der besagten Relais-Basisstation (103), eines zweiten Signals (s2) von der besagten Master-Basisstation (104) unter Verwendung des besagten zweiten Frequenzbands (f2);
- Umwandeln, **durch** die besagte Relais-Basisstation (103), des besagten zweiten Frequenzbands (f2) des besagten zweiten Signals (s2) in das besagte erste Frequenzband (f1);
- Übertragen des besagten zweiten Signals (s2) von der besagten Relais-Basisstation (103) an die besagte Zugangsbasisstation (102) unter Verwendung des besagten ersten Frequenzbands (f1);
- Umwandeln, **durch** die besagte Zugangsbasisstation (102), des besagten ersten Frequenzbands (f1) des besagten zweiten Signals (s2) in das besagte zweite Frequenzband (f2); und
- Übertragen des besagten zweiten Signals (s2) von der besagten Zugangsbasisstation (102) an die besagte mobile Station (101) unter Verwendung des besagten zweiten Frequenzbands (f2).

2. Verfahren nach Anspruch 1, wobei das digitale zellulare Kommunikationssystem den Standards IEEE 802.16 und/oder Long Term Evolution entspricht.

3. Verfahren nach Anspruch 1, wobei die besagte Basisstation weiterhin eine Richtantenne für die Erweiterung der Reichweite der Signalübertragung umfasst.

4. Computerprogramm-Produkt, gespeichert auf einem computerverwendbaren Medium, umfassend computerlesbare Programm-Mittel zum Verursachen, dass ein Computer ein Verfahren gemäß einem beliebigen der vorstehenden Ansprüche 1 bis 3 ausführt, wenn das besagte Programm auf dem besagten Computer läuft.

5. Erste Relais-Basisstation in einem digitalen zellularen Kommunikationssystem, wobei das besagte zellulare Kommunikationssystem weiterhin eine an die besagte erste Relais-Basisstation gekoppelte Zugangsbasisstation umfasst, wobei die besagte Zugangsbasisstation für das Kommunizieren mit einer Mehrzahl von mobilen Stationen ausgelegt ist, wobei die besagte erste Relais-Basisstation an eine zweite Basisstation gekoppelt ist, wobei die besagte erste Relais-Basisstation umfasst:
- Mittel zum Empfangen eines ersten Signals (s1) von der besagten Zugangsbasisstation unter Verwendung des besagten zweiten Frequenzbands (f2), wobei die besagte erste Relais-Basisstation für den Empfang unter Verwendung des besagten zweiten Frequenzbands (f2) ausgelegt ist;
- Mittel zum Umwandeln des besagten zweiten Frequenzbands (f2) des besagten ersten Signals (s1) in das besagte erste Frequenzband (f1), wobei die besagte erste Relais-Basisstation für das Übertragen unter Verwendung des besagten ersten Frequenzbands (f1) ausgelegt ist;
- Mittel zum Übertragen des besagten ersten Signals (s1) an die besagte zweite Basisstation unter Verwendung des besagten ersten Frequenzbands (f1);
- Mittel zum Empfangen eines zweiten Signals (s2) von der besagten zweiten Basisstation unter Verwendung des besagten zweiten Frequenzbands (f2);
- Mittel zum Umwandeln des besagten zweiten Frequenzbands (f2) des besagten zweiten Signals (s2) in das besagte erste Frequenzband (f1);
- Mittel zum Übertragen des besagten zweiten Signals (s2) an die besagte Zugangsbasisstation unter Verwendung des besagten ersten Frequenzbands (f1).

6. Erste Relais-Basisstation nach Anspruch 5, wobei die besagte zweite Basisstation eine Master-Basisstation ist, wobei die besagte Master-Basisstation an ein Kernnetzwerk gekoppelt ist, wobei die besagte Master-Basisstation für das Kommunizieren von einer Mehrzahl von Zugangsbasisstationen innerhalb des besagten digitalen zellularen Kommunikationssystems ausgelegt ist, wobei die besagte Master-Basisstation für das Kommunizieren mit einer Mehrzahl von mobilen Stationen ausgelegt ist.

7. Erste Relais-Basisstation nach Anspruch 5, wobei die besagte zweite Basisstation an eine dritte Relais-Basisstation gekoppelt ist, wobei die besagte dritte Relais-Basisstation an eine Master-Basisstation gekoppelt ist, wobei die besagte Master-Basisstation für das Empfangen von Kommunikationen von einer Mehrzahl von Zugangsbasisstationen und das Übertragen an eine Mehrzahl von Zugangsbasisstationen innerhalb des besagten digitalen zellularen Kommunikationssystems ausgelegt ist, wobei die besagte Master-Basisstation für das Kommunizieren mit einer Mehrzahl von mobilen Stationen ausgelegt ist, wobei die besagte dritte Relaisstation eine erste Relaisstation wie in Anspruch 6 beschrieben ist.

8. Erste Relais-Basisstation nach Anspruch 7, wobei die besagte zweite Basisstation für das Kommunizieren mit einer Mehrzahl von mobilen Stationen ausgelegt ist.

## Revendications

1. Procédé de gestion de la voie de retour intrabande par duplexage par répartition en fréquence (FDD) pour établir une transmission sans fil entre au moins une station de base d'accès (102) et une station de base maître (104) dans un système de communication cellulaire numérique, ladite station de base d'accès (102) étant couplée à au moins une station mobile (101), ladite station de base d'accès (102) étant couplée à une station de base relais (103), ladite station de base relais (103) étant couplée à ladite station de base maître (104), ladite station de base maître (104) étant couplée à un coeur de réseau (105), ledit procédé comprenant les étapes suivantes :
- recevoir un premier signal (s1) au moyen de ladite station de base d'accès (102) à partir de ladite station mobile (101) en utilisant une première bande de fréquences (f1) ;
- transformer ladite première bande de fréquences (f1) dudit premier signal (s1) en une deuxième bande de fréquences (f2) au moyen de ladite station de base d'accès (102) ;
- transmettre ledit premier signal (s1) à partir de ladite station de base d'accès (102) vers ladite station de base relais (103) en utilisant ladite deuxième bande de fréquences (f2), dans lequel ladite station de base d'accès (102) est adaptée pour la transmission en utilisant ladite deuxième bande de fréquences (f2) ;
- transformer ladite deuxième bande de fréquences (f2) dudit premier signal (s1) en ladite première bande de fréquences (f1) au moyen de ladite station de base relais (103), dans lequel ladite station de base relais (103) est adaptée pour la transmission en utilisant ladite première bande de fréquences (f1) ; et
- transmettre ledit premier signal (s1) à partir de ladite station de base relais (103) vers ladite station de base maître (104) en utilisant ladite première bande de fréquences (f1),
**caractérisé par** les étapes suivantes :
- recevoir un deuxième signal (s2) au moyen de ladite station de base relais (103) à partir de ladite station de base maître (104) en utilisant ladite deuxième bande de fréquences (f2) ;
- transformer ladite deuxième bande de fréquences (f2) dudit deuxième signal (s2) en ladite première bande de fréquences (f1) au moyen de ladite station de base relais (103) ;
- transmettre ledit deuxième signal (s2) à partir de ladite station de base relais (103) vers ladite station de base d'accès (102) en utilisant ladite première bande de fréquences (f1) ;
- transformer ladite première bande de fréquences (f1) dudit deuxième signal (s2) en ladite deuxième bande de fréquences (f2) au moyen de ladite station de base d'accès (102) ; et
- transmettre ledit deuxième signal (s2) à partir de ladite station de base d'accès (102) vers ladite station mobile (101) en utilisant ladite deuxième bande de fréquences (f2).

2. Procédé selon la revendication 1, dans lequel ledit système de communication cellulaire numérique est conforme à la norme IEEE 802.16 et/ou à la norme d'évolution à long terme.

3. Procédé selon la revendication 1, dans lequel lesdites stations de base comprennent en outre une antenne directionnelle pour étendre la portée de transmission des signaux.

4. Produit de programme informatique stocké sur un support lisible par ordinateur, comprenant des moyens de programme lisible par un ordinateur pour provoquer l'exécution par un ordinateur d'un procédé selon l'une quelconque des revendications précédentes 1 à 3 lorsque ledit programme est exécuté sur ledit ordinateur.

5. Première station de base relais dans un système de communication cellulaire numérique, ledit système de communication cellulaire comprenant en outre une station de base d'accès couplée à ladite première station de base relais, dans laquelle ladite station de base d'accès est adaptée pour communiquer avec une pluralité de stations mobiles, ladite première station de base relais étant couplée à une deuxième station de base, ladite première station de base relais comprenant :
- moyens pour recevoir un premier signal (s1) à partir de ladite station de base d'accès en utilisant ladite deuxième bande de fréquences (f2), dans laquelle ladite première station de base relais est adaptée pour la réception en utilisant ladite deuxième bande de fréquences (f2) ;
- moyens pour transformer ladite deuxième bande de fréquences (f2) dudit premier signal (s1) en ladite première bande de fréquences (f1), ladite première station de base relais étant adaptée pour la transmission en utilisant ladite première bande de fréquences (f1);
- moyens pour transmettre ledit premier signal (s1) vers ladite deuxième station de base en utilisant ladite première bande de fréquences (f1).
- moyens pour recevoir un deuxième signal (s2) à partir de ladite deuxième station de base en utilisant ladite deuxième bande de fréquences (f2) ;
- moyens pour transformer ladite deuxième bande de fréquences (f2) dudit deuxième signal (s2) en ladite première bande de fréquences (f1) ;
- moyens pour transmettre ledit deuxième signal (s2) vers ladite station de base d'accès en utilisant ladite première bande de fréquences (f1).

6. Première station de base relais selon la revendication 5, dans laquelle ladite deuxième station de base est une station de base maître, ladite station de base maître est couplée à un coeur de réseau, ladite station de base maître est adaptée pour communiquer à partir d'une pluralité de stations de base d'accès à l'intérieur dudit système de communication cellulaire numérique, dans laquelle ladite station de base maître est adaptée pour communiquer avec une pluralité de stations mobiles.

7. Première station de base relais selon la revendication 5, dans laquelle ladite deuxième station de base est couplée à une troisième station de base relais, ladite troisième station de base relais est couplée à une station de base maître, ladite station de base maître est adaptée pour recevoir une communication provenant d'une pluralité de stations de base d'accès à l'intérieur dudit système de communication cellulaire numérique et pour transmettre vers celle-ci, dans laquelle ladite station de base maître est adaptée pour communiquer avec une pluralité de stations mobiles, dans laquelle ladite troisième station relais est une première station relais telle que décrite dans la revendication 6.

8. Première station de base relais selon la revendication 7, dans laquelle ladite deuxième station de base est adaptée pour communiquer avec une pluralité de stations mobiles.
